# EUROPEAN PATENT APPLICATION

(11) **EP 1 757 957 A2**
(43) Date of publication of application: **28.02.2007**
(21) Application number: 06016929.9
(22) Date of filing: 14.08.2006
(51) Int. Cl.: G02B 1/04, C08G 73/10

(54) **Fluorinated polyamide acid resin composition for optical materials**

(30) Priority: 22.08.2005 JP 2005240467
(71) Applicant: NIPPON SHOKUBAI CO., LTD., Osaka-shi, Osaka (JP)
(72) Inventor: Makino, Tomomi, Ashiya-shi Hyogo (JP); Tajiri, Kozo, Sanda-shi Hyogo (JP)
(74) Representative: Müller-Boré & Partner Patentanwälte

(57) **Abstract**

A fluorinated polyamide acid resin composition for optical materials containing a fluorinated polyamide acid and a non-polycondensable compound (A) with an aromatic ring having a boiling point of 340°C or lower, the resin composition being used for obtaining a fluorinated polyimide membrane by a baking process. This fluorinated polyamide acid resin composition for optical materials contains a non-polycondensable compound (A) which was found to reduce a light absorption at 1.49 µm and a light absorption at 1.35 µm and extending to visible light, even if the baking temperature is 340°C or lower.

## Description

The present invention relates to a fluorinated polyamide acid resin composition which can produce polyimide membranes (including films; the same holds for the following) having excellent heat resistance, chemical resistance, water repellency, dielectric property, electric property, and optical property, and more specifically, to a fluorinated polyamide acid resin composition for optical materials which can produce a fluorinated polyimide membrane exhibiting a low optical loss particularly at 1.49 µm and at 1.35 µm or lower.

It has been known that fluorinated polyimides, for example, fully fluorinated polyimides made of repeating units having only carbon-fluorine bonds (C-F bonds) in place of carbon-hydrogen bonds (C-H bonds) are useful for optical materials (e.g., Japanese Patent Application Laid-open (JP-A) No. 2004-269591). These fully fluorinated polyimides have gotten a lot of attention because they have a sufficient heat resistance to produce opto-electronic integrated circuits, and exhibit a low optical loss for near-infrared region light, particularly in an optical communication wavelength region.

Opto-electronic integrated circuits need to have optical waveguide devices. When an optical waveguide device is produced using a fluorinated polyimide, there has been employed a method in which a fluorinated polyamide acid varnish as a precursor of the fluorinated polyimide is applied to a substrate, followed by baking.

By the way, in the next generation FTTH (Fiber to the Home), the B-PON (Broadband Passive Optical Network) system standardized as ITU-T Recommendation G. 983.1 is promising and proceeding in the change from the existing A-PON (Asynchronous Transfer Mode Passive Optical Network) system. In the case of the A-PON system, 1.31 µm as an uplink wavelength and 1.55 µm as a downlink wavelength are being used, fluorinated polyimide membranes exhibit a low optical loss at these two wavelengths, which have made them useful as optical materials.

On the other hand, in the case of the B-PON system, 1.49 µm as a downlink communication wavelength is going to be used, according to the studies by the present inventors, fully fluorinated polyimide membranes as well as partially fluorinated polyimide membranes exhibited a light absorption at 1.49 µm. As the results of further studies continued by the inventors, this is due to a light absorption peak resulting from baking at about 300°C, and it was found that the peak became small by increasing the maximum temperature higher than 340°C in a baking process of a polyamide acid. However, with an increase in baking temperature, color development of a polyimide membrane becomes stronger, which causes a problem that an optical loss at 1.35 µm or lower becomes greater, and also a problem that residual stress generated in the polyimide membrane after baking is increased due to a difference in linear thermal expansion coefficient between the polyimide membrane and the substrate to make the subsequent production process of an optical waveguide difficult.

Under these circumstances, it is an object of the present invention to provide a fluorinated polyamide acid resin composition for optical materials, which can produce a fluorinated polyimide membrane exhibiting a low optical loss at 1.49 µm and a low optical loss at 1.35 µm or lower, even if the baking temperature is 340°C or lower.

The present inventors have extensively studied, and as a result, have found a compound which can reduce a light absorption at 1.49 µm and a light absorption at 1.35 µm and extending to visible light, even if the baking temperature is 340°C or lower, thereby completing the present invention.

Thus, the present invention provides a fluorinated polyamide acid resin composition for optical materials, comprising a fluorinated polyamide acid and a non-polycondensable compound (A) with an aromatic ring having a boiling point of 340°C or lower, the composition being used for obtaining a fluorinated polyimide membrane by a baking process.

In the fluorinated polyamide acid resin composition for optical materials according to the present invention, the above compound (A) may preferably be a compound with two or more aromatic rings, more preferably a compound of formula (1): 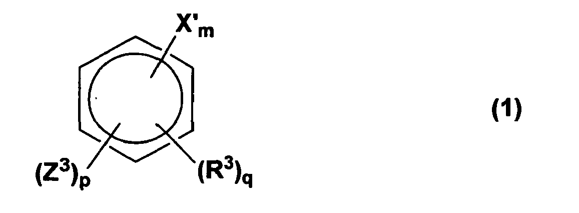 [wherein Z³'s each independently means a group of formula (2): 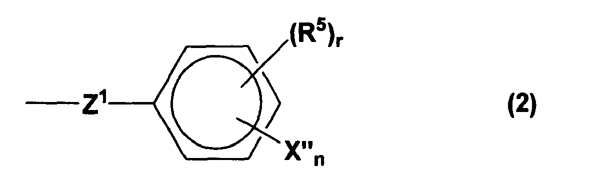 (wherein Z¹ means a divalent organic group or a direct bond; R⁵'s each independently means -CN, -CF₃, -NO₂, -COOR⁴, or -OR⁴; X"s each independently means a halogen atom; r and n each independently means an integer of 0 to 5; and r + n is 0 to 5; wherein R⁴ means an alkyl group, a deuterated alkyl group, or a halogenated alkyl group);
R³' s each independently means -CN, -CF₃, -NO₂, -COOR⁴, or -OR⁴; X's each independently means a halogen atom; p means an integer of 1 to 6; q and m each independently means an integer of 0 to 5; and p + q + m is 1 to 6; wherein R⁴ means an alkyl group, a deuterated alkyl group, or a halogenated alkyl group]. The above fluorinated polyamide acid may preferably be a fully fluorinated polyamide acid.

The present invention further provides a fluorinated polyimide membrane for optical materials, which is obtainable from a fluorinated polyamide acid resin composition for optical materials, comprising a fluorinated polyamide acid and the above compound (A), and which has a Y value of 15 or lower; as well as a fluorinated polyimide membrane for optical materials, which exhibits an optical loss at a wavelength of 1.49 µm is 0.42 dB/cm or lower and an optical loss at a wavelength of 0.85 µm is 1.6 dB/cm or lower.

The present invention further provides an optical waveguide device comprising either of these fluorinated polyimide membranes for optical materials.

According to the present invention, compound (A) which can actively discharge water generated by the imidation of a polyamide acid outside a polyimide membrane was added, and therefore, even if the baking temperature is 340°C or lower, an optical loss at 1.49 µm was able to be decreased, while suppressing light absorption of the polyimide membrane at a shorter wavelength (at 1.35 µm and extending to visible light). Further, even when a fully fluorinated polyamide acid was used as a starting material, a polyimide membrane having a Y value of 15 or lower was obtained.

Further, according to the present invention, there were provided an optical waveguide exhibiting an optical loss of 0.23 dB/cm or lower at 1.49 µm and 2.4 dB/cm or lower at 0.85 µm when the baking temperature is 340°C; an optical waveguide exhibiting an optical loss of 0.42 dB/cm or lower at 1.49 µm and 1.6 dB/cm or lower at 0.85 µm when the baking temperature is 300 °C; and an optical waveguide exhibiting an optical loss of 1.4 dB/cm or lower at 1.49 µm and 0.5 dB/cm or lower at 0.85 µm when the baking temperature is 250°C, respectively.
FIG. 1 is optical loss spectra obtained when bis (pentafluorophenyl) sulfide was used as compound (A) and baking was carried out at 340°C (Experiment 5).
FIG. 2 is optical loss spectra obtained when baking was carried out at 300°C in the system shown in FIG. 1 (Experiment 5).
FIG. 3 is optical loss spectra obtained when baking was carried out at 250°C in the system shown in FIG. 1 (Experiment 5).
FIG. 4 is optical loss spectra obtained when bis (pentafluorophenyl) sulfone was used as compound (A) (Experiment 6).
FIG. 5 is optical loss spectra obtained when pentafluorobiphenyl was used as compound (A) (Experiment 6).
FIG. 6 is optical loss spectra obtained when diphenylsulfide was used as compound (A) (Experiment 6).
FIG. 7 is optical loss spectra obtained when 4-phenoxyheptafluorotoluene was used as compound (A) and baking was carried out at 320°C (Experiment 7).
FIG. 8 is optical loss spectra obtained when baking was carried out at 250°C in the system shown in FIG. 7 (Experiment 7).

The fluorinated polyamide acid resin composition for optical materials according to the present invention is characterized in that it comprises a fluorinated polyamide acid and a non-polycondensable compound (A) with an aromatic ring having a boiling point of 340 °C or lower. The addition of compound (A) makes it possible to carry out baking at a low temperature, resulting in a reduction of light absorption at 1.49 µm, while maintaining the effect of reducing light absorption at a shorter wavelength.

It is assumed that water is generated when a polyamide acid is converted to a polyimide (i.e., imidation), and this water attacks an aromatic ring of a fluorinated polyimide to form C-OH, and this stretching vibration of -O-H appears as a light absorption at 1.49 µm. On the other hand, it is assumed that a light absorption at 1.35 µm and extending to visible light is due to color development by the oxidation of a polyimide at a high temperature in the baking with water generated in the above imidation and remaining in the membrane. In the present invention, it is assumed that the addition of compound (A) having a boiling point of 340°C or lower (i.e., water discharging accelerator) makes it possible that water is rapidly discharged outside the membrane, even when baking is carried out at a low temperature, which loses a chance of attack against the aromatic rings, thereby reducing light absorption at 1.49 µm and suppressing the oxidation of a polyimide to prevent color development at a shorter wavelength.

The fluorinated polyamide acid to be used in the present invention is not particularly limited, but from the viewpoints of excellent heat resistance, chemical resistance, water repellency, dielectric property, electric property, and optical property, there may be preferable a fluorinated polyamide acid having, as a constituent unit, a fluorinated amide acid of formula (3) : 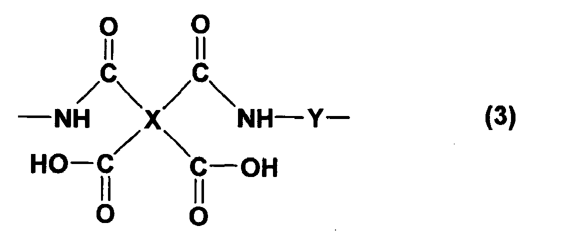 wherein X means a tetravalent organic group; Y means a divalent organic group; and X and/or Y have at least one fluorine atom.

In the above formula (3), the tetravalent organic group represented by X may include tetravalent halogen-containing aliphatic organic groups derived from cyclic alkyls, liner alkyls, olefins, glycols, and the like; and tetravalent halogen-containing aromatic organic groups derived from benzene, biphenyl, biphenyl ether, bisphenyl benzene, bisphenoxy benzene, and the like. These tetravalent organic groups may contain C-H bonds, and preferably, the hydrogen atoms of the C-H bonds are substituted with halogen atoms (any of a fluorine atom, a chlorine atom, a bromine atom, and an iodine atom). The kinds of halogen atoms may be the same or different. In these tetravalent organic groups, tetravalent halogen-containing aromatic organic groups may be preferable, fully fluorinated tetravalent aromatic organic groups may be more preferable, and there may be particularly preferable tetravalent organic groups of the formulas:

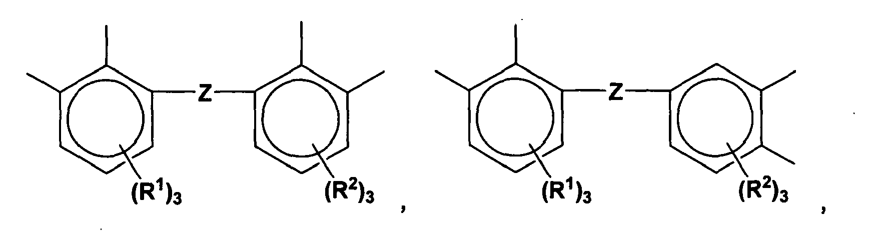

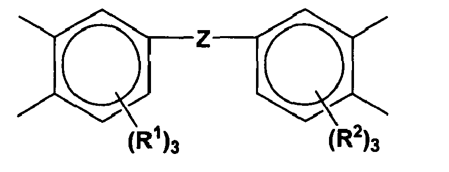

In the above three kinds of formulas, R¹'s and R²'s each means a hydrogen atom, a fluorine atom, a chlorine atom, a bromine atom, or an iodine atom. R¹'s and R²'s may be the same or different, but the case where all are hydrogen atoms is excluded. Preferably, any one of them is a fluorine atom, and more preferably, all of them are fluorine atoms.

In the above three kinds of formulas, Z is a divalent group of the formula:

-O-, -S-,

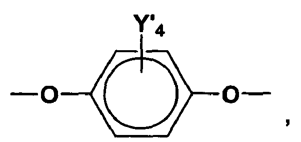

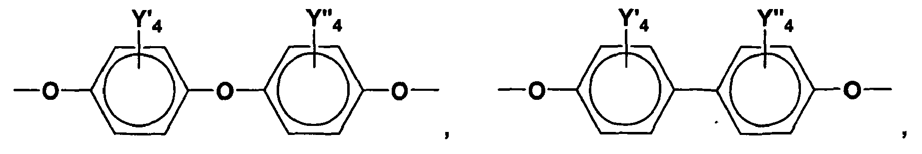

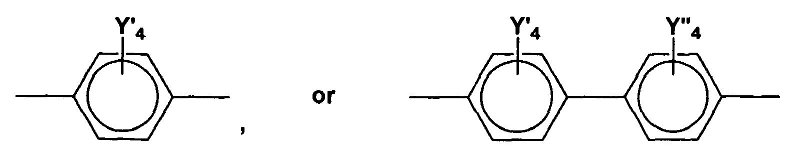

In the above formula representing "Z", Y's and Y"s each means a hydrogen atom, a fluorine atom, a chlorine atom, a bromine atom, or an iodine atom. Preferably, any one of them is a fluorine atom, and more preferably, all of them are fluorine atoms. In the formulas representing the above "Z", when both of Y's and Y"s exist, Y's and Y"s may be the same or different and may respectively be the same or different in the respective benzene rings, but the case where all are hydrogen atoms is not included. In these divalent groups, Z may preferably be a divalent group of the formula:

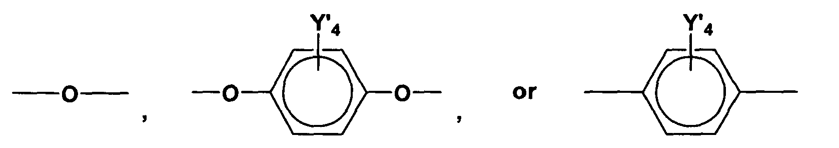

In the above formula (3), Y is a divalent organic group, and when X has no fluorine atoms, Y may preferably have a fluorine atom. Preferable examples of Y may include i) divalent halogen-containing aliphatic groups may optionally contain a linear chain or a branched chain or a ring, all consisting only of carbon-halogen bonds; halogen-containing aromatic group; and divalent halogen-containing organic groups in which two or more of the above aliphatic groups or aromatic groups are bonded through a heterogeneous atom other than a carbon atom, such as an oxygen atom, a nitrogen atom, or a sulfur atom. All of the halogen atoms are not required to be the same, and different halogen atoms may be contained in the "Y". The divalent halogen-containing aliphatic groups in the above i) may include divalent halogen-containing aliphatic organic groups derived from cyclic alkyls, chain alkyls, olefins, glycols, and the like; and divalent halogen-containing aromatic organic groups derived from benzene, biphenyl, biphenyl ether, bisphenylbenzene, bisphenoxybenzene, and the like. In the "Y" also, all of the hydrogen atoms in the C-H bonds may preferably be substituted with one or more halogen atoms (any of a fluorine atom, a chlorine atom, a bromine atom, and an iodine atom).

In the above formula (3), the divalent organic group represented by Y may preferably be a divalent organic group represented below in i) or ii). Considering heat resistance, chemical resistance, water repellency, and low dielectric property, a divalent organic group represented below in ii) may be most preferable.
i) 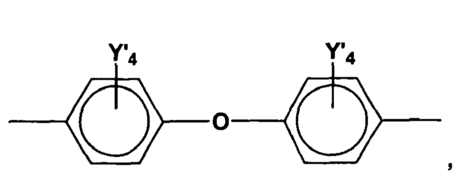 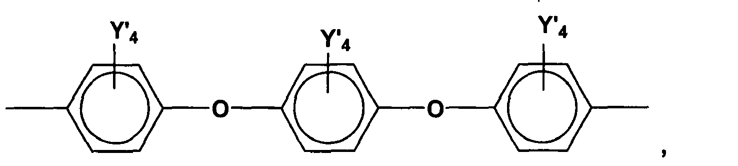 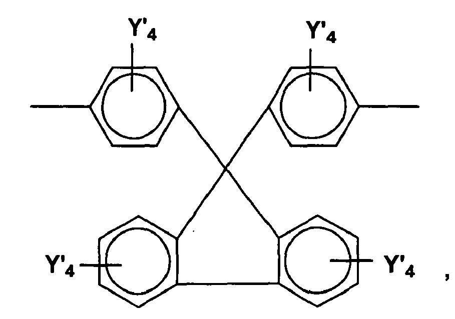 and the like
ii)

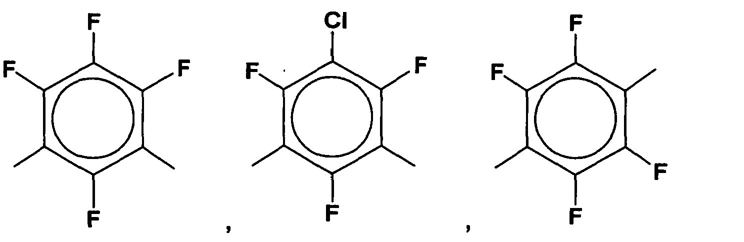

In the present invention, as described above, the halogenated polyamide acid having a repeating unit of the above formula (3) contains a fluorine atom(s), preferable examples of which may include partially fluorinated polyamide acids and fully fluorinated polyamide acids. The halogenated polyamide acid having a repeating unit of the above formula (3) can attain, by the presence of such a repeating unit, a desired refractive index (i.e., a refractive index difference Δn from the existing fluorinated polyimides) in the halogenated polyimide of the present invention formed therefrom. In the present invention, as the polyamide acid, those which have no carbon-hydrogen bonds (C-H bonds), that is, those in which all of hydrogen atoms bonded to carbon atoms forming the above formula (3) are substituted with halogen atoms (any of a fluorine atom, a chlorine atom, a bromine atom, and an iodine atom) to have at least one fluorine atom may be preferable, considering a light transmission loss for near infrared region light, particularly in the optical communication wavelength region (i.e., in the range of from 1.0 to 1.7 µm). That is, this can become a starting material of a fluorinated polyimide film which is excellent in heat resistance, chemical resistance, water repellency, dielectric property, electric property, and optical property.

Further, the production method of a halogenated polyamide acid having a repeating unit of the above formula (3) will be described below in detail. It is considered from the description that although the terminal of the polyamide acid may vary depending on the addition amounts (molar ratios) of a diamine compound and a tetra carboxylic acid derivative, it may be either of the amine terminal or the acid derivative terminal. Further, the polyamide acid may be those which have the same repeating unit or those which have different repeating units, in which latter case the repeating units may be of the block type or of the random type.

The polyamide acid can be produced by known techniques or combinations thereof, and the production method is not particularly limited. In general, there may preferably be used a process of reacting a diamine compound of formula (4) below (hereinafter referred to simply as "diamine compound" in some cases) with a tetracarboxylic acid of formula (5) below, its acid anhydride or acid chloride, or its esterified product (hereinafter referred to simply as "tetracarboxylic acids" in some cases). Further, the "Y" in formula (4) below and the "X" in formula (5) below are the same as defined in the above formula (3).

H₂N-Y-NH₂ (4)

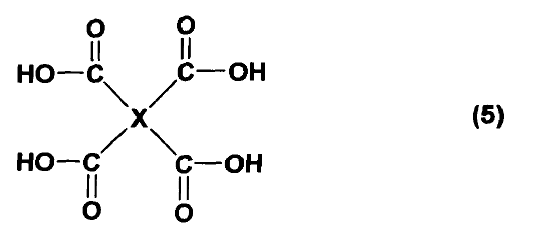

The diamine compound is not particularly limited, so long as it has a structure such that a halogenated polyamide acid having a repeating unit of the above formula (3) can be produced by being reacted with the tetracarboxylic acid and the like. The diamine compound may includes, by analogy with a preferable structure of the polyamide acid,
i) 4,4'-diaminodipenyl ether,
   2,2-dimethyl-4,4'-diaminobipenyl,
   2,2-bis[4-(4-aminophenoxy)phenyl]propane,
   1,4-bis(4-aminophenoxy)benzene,
   9,9-bis(4-aminophenyl)fluorene;
ii) 5-chloro-1,3-diamino-2,4,6-trifluorobenzene,
   2,4,5,6-tetrachloro-1,3-diaminobenzene,
   2,4,5,6-tetrafluoro-1,3-diaminobenzene,
   4,5,6-trichloro-1,3-diamino-2-fluorobenzene,
   5-bromo-1,3-diamino-2,4,6-trifluorobenzene, and
   2,4,5,6-tetrabromo-1,3-diaminobenzene. These diamine compounds may be used alone, or two or more kinds of them may also be used in combination. In these diamine compounds,
   2,4,5,6-tetrafluoro-1,3-diaminobenzene and
   5-chloro-1,3-diamino-2,4,6-trifluorobenzene may be particularly preferable.

On the other hand, the tetracarboxylic acids are not particularly limited and can be produced by known techniques, such as a process described in the Japanese Patent Application Laid-open (JP-A) No. 11-147955, or combinations thereof. The tetracarboxylic acids may includes halogenated tetracarboxylic acids such as hexafluoro-3,3',4,4'-biphenyltetracarboxylic acid,
hexachloro-3,3',4,4'-biphenyltetracarboxylic acid,
hexafluoro-3,3',4,4'-biphenylether tetracarboxylic acid, hexachloro-3,3',4,4'-biphenylether tetracarboxylic acid,
bis(3,4-dicarboxytrifluorophenyl)sulfide,
bis(3,4-dicarboxytrichlorophenyl)sulfide,
1,4-bis(3,4-dicarboxytrifluorophenoxy)-tetrafluorobenzene,
1,4-bis(3,4-dicarboxytrichlorophenoxy)-tetrafluorobenzene,
1,4-bis(3,4-dicarboxytrifluorophenoxy)-tetrachlorobenzene,
1,4-bis(3,4-dicarboxytrichlorophenoxy)-tetrachlorobenzene, 3,6-difluoropyromellitic acid,
3,6-dichloropyromellitic acid, and
3-chloro-6-fluoropyromellitic acid; their corresponding acid dianhydrides; their corresponding acid chlorides; and their esterified products such as methyl esters and ethyl esters. These tetracarboxylic acids may be used alone, or two or more kinds of them may also be used in combination. In these tetracarboxylic acids,
hexafluoro-3,3',4,4'-biphenyltetracarboxylic acid,
hexafluoro-3,3',4,4'-biphenylether tetracarboxylic acid, 1,4-bis(3,4-dicarboxytrifluorophenoxy)-tetrafluorobenzene,
1,4-bis(3,4-dicarboxytrifluorophenoxy)-tetrachlorobenzene, their corresponding acid dianhydrides, and their corresponding acid chlorides may be preferable, and
hexafluoro-3,3',4,4'-biphenylether tetracarboxylic acid, 1,4-bis(3,4-dicarboxytrifluorophenoxy)-tetrafluorobenzene,
1,4-bis(3,4-dicarboxytrifluorophenoxy)-tetrachlorobenzene, and their corresponding acid dianhydrides may be particularly preferable.

The desired polyamide acid can be produced by a process of reacting a diamine compound with any of tetracarboxylic acids in an organic solvent.

The addition amount of the diamine compound may be an amount at which the diamine compound can be efficiently reacted with any of the tetracarboxylic acids, and is not particularly limited. Specifically, the addition amount of the diamine compound is stoichiometrically equimolar with any of the tetracarboxylic acids, but may preferably be 0.8 to 1.2 moles, more preferably 0.9 to 1.1 moles, when the total mole number of any of the tetracarboxylic acids is set to 1 mole. When the addition amount of the diamine compound is smaller than 0.8 moles, any of the tetracarboxylic acids may remain in large quantity, so that a purification step may be complicated, and the degree of polymerization may be unable to be increased. In contrast, when the addition amount of the diamine compound is greater than 1.2 moles, the diamine compound may remain in large quantity, so that a purification step may be complicated, and the degree of polymerization may be unable to be increased.

The reaction can be carried out in an organic solvent. The organic solvent is not particularly limited, so long as the reaction of the diamine compound with any of the tetracarboxylic acids can efficiently proceed and it is inactive for these starting materials. The organic solvent which can be used may include polar organic solvents such as N-methyl-2-pyrrolidinone, N,N-dimethylacetamide, N,N-dimethylformamide, dimethylsulfoxide, sulfolane, methyl isobutyl ketone, acetonitrile, and benzonitrile. These organic solvents may be used alone, or two or more kinds of them may also be used in combination. Further, the amount of organic solvent is not particularly limited, so long as it is an amount at which the reaction of the diamine compound with any of the tetracarboxylic acids can efficiently proceed. It may preferably be an amount at which the concentration of the diamine compound in the organic solvent is 1% to 80% by mass, more preferably 5% to 50% by mass.

The conditions of reaction of the diamine compound with any of the tetracarboxylic acids are not particularly limited, so long as these reactions can sufficiently proceed. For example, the reaction temperature may preferably be 0°C to 100°C, more preferably 20°C to 50°C. Further, the reaction time may usually be 1 to 72 hours, preferably 2 to 48 hours. Further, the reaction may be carried out under either pressure, i.e., under increased pressure, under normal pressure, or under reduced pressure, but may preferably be carried out under normal pressure. Further, the reaction of the diamine compound with any of the tetracarboxylic acids may preferably be carried out under a dry inert gas atmosphere, considering the reaction efficiency, the degree of polymerization, and the like. The relative humidity in the reaction atmosphere at this time may preferably be 10% RH or lower, more preferably 1% RH or lower. As the inert gas, nitrogen, helium, argon, or the like can be used.

It is a key point of the present invention that a non-polycondensable compound (A) with an aromatic ring having a boiling point of 340°C or lower is allowed to coexist in the baking of a fluorinated polyamide acid into a polyimide. The compound (A) is a compound which can reduce an optical loss at 1.49 µm and at 1.35 µm or lower by the water discharging acceleration function as described above, and the addition of this compound
(A) made it possible to provide an optical device exhibiting a low optical loss at the objective three wavelengths, i.e., at 1.33 µm, 1.49 µm, and 1.55 µm.

The compound (A) is not particularly limited, so long as it is a non-polycondensable compound with an aromatic ring having a boiling point (under normal pressure) of 340°C or lower. When it is a compound with a boiling point (under normal pressure) of 340°C or lower, more preferably 320°C or lower, and still more preferably 300°C or lower, it exhibits the water discharging acceleration function by vaporizing itself together with water on heating in a baking process for imidation. Although compound (A) may preferably be vaporized wholly in a baking process, its some amount may remain in a polyimide membrane unless it adversely affects the physical properties of the membrane. The reason why compound (A) is limited to a non-polycondensable compound is that a compound causing its polycondensation in a baking process is assumed to remain in a polyimide membrane as an impurity without vaporization in the baking process, so that such a polycondensable compound is to be excluded. To vaporize compound (A) together with water generated by the formation of a polyimide, the boiling point of compound (A) may preferably be 100°C or higher, more preferably 200°C or higher. In addition, the boiling points of compounds (A) may be available from catalog values and the like.

As compound (A), in various compounds with an aromatic ring, a compound with two or more aromatic rings may be particularly preferable, such a compound is recited as the following compounds of formula (1). 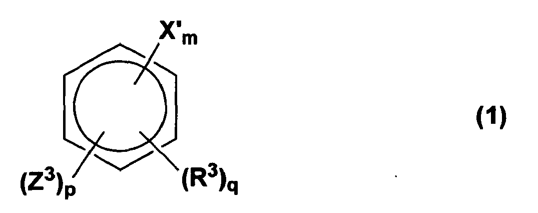 [wherein Z³'s each independently means a group of formula (2): 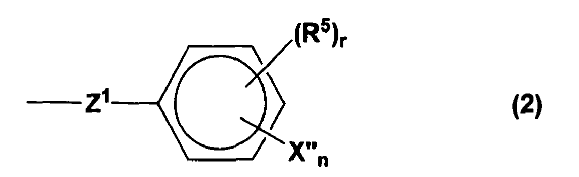 (wherein Z¹ means a divalent organic group or a direct bond; R⁵'s each independently means -CN, -CF₃, -NO₂, -COOR⁴, or -OR⁴; X"s each independently means a halogen atom; r and n each means an integer of 0 to 5; and r + n is 0 to 5; wherein R⁴ means an alkyl group, a deuterated alkyl group, or a halogenated alkyl group) ; R³' s each independently means -CN, -CF₃, -NO₂, -COOR⁴, or -OR⁴; X's each independently means a halogen atom; p means an integer of 1 to 6; q and m each independently means an integer of 0 to 5; and p + q + m is 1 to 6; wherein R⁴ means an alkyl group, a deuterated alkyl group, or a halogenated alkyl group].

In the above formulas (1) and (2), substituent groups represented by R³ or R⁵ may preferably be -CN or -CF₃. Further, p may preferably be 1. Each of q and r may preferably be 0 or 1.

In the above formula (1), R⁴ means an alkyl group, a deuterated alkyl group, or a halogenated alkyl group. The term "deuterated alkyl group" as used herein means an alkyl group in which hydrogen atoms bonded to carbon atoms forming the alkyl group are fully or partially substituted with deuteriums. The term "halogenated alkyl group" as used herein means an alkyl group in which hydrogen atoms bonded to carbon atoms forming the alkyl group are fully or partially substituted with halogen atoms (i.e., at least one or more of a fluorine atom, a chlorine atom, a bromine atom, and an iodine atom). The structure of these groups is not particularly limited, but any structure such as linear chain, branched chain, and cyclic alkyl groups may be used. In an alkyl group, a deuterated alkyl group, or a halogenated alkyl group, the number of carbon atoms forming each of these alkyl groups may preferably be 1 to 12, more preferably 1 to 8. As an alkyl group having 1 to 12 carbon atoms, for example, preferable are a methyl group, an ethyl group, a propyl group, an isopropyl group, a butyl group, an isobutyl group, a pentyl group, and an isopentyl group.

In the above formula (1), when two of q substituent groups represented by R³'s are -CN, the compound of formula (1) can be said to be a phthalonitrile compound, and such a phthalonitrile compound can also be used as compound (A) of the present invention. Preferable substituent groups in a phthalonitrile compound are the same as those in a benzonitrile compound.

In the above formula (2), when Z¹ is a divalent organic group, it may preferably contain a carbon atom(s), a sulfur atom(s), a nitrogen atom(s), and/or an oxygen atom(s). More preferably, Z¹ may be a group containing a carbonyl group(s), a methylene group(s), a sulfide group(s), a sulfoxide group(s), a sulfonic group (s), a heterocyclic group (s), and the like. Still more preferably, Z¹ may a group of any of formulas (6-1) to (6-16):

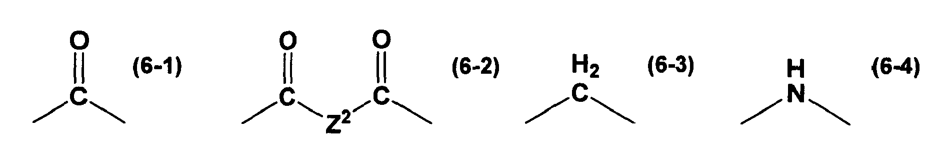

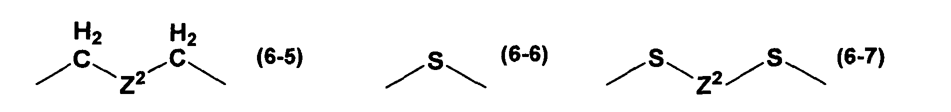

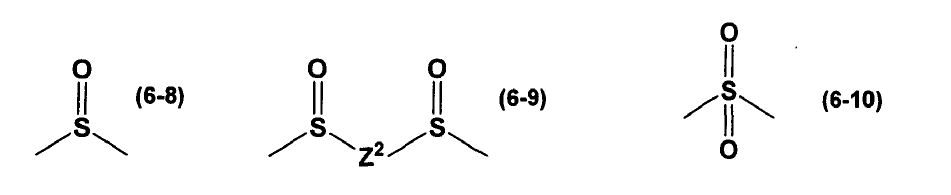

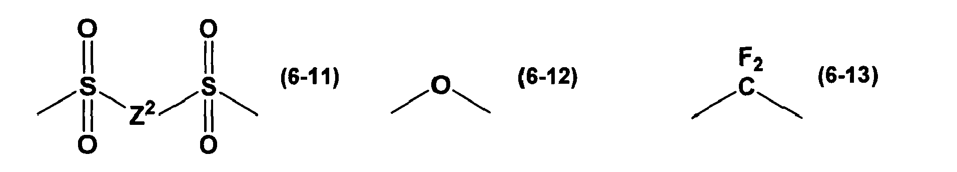

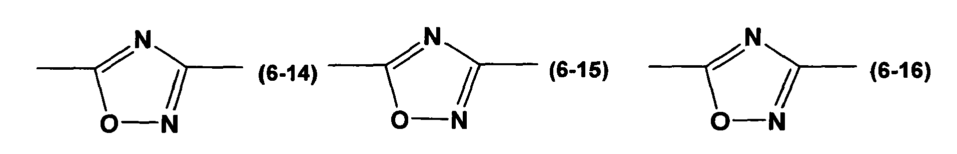

In these groups, the groups of formulas (6-6) and (6-12) may be preferable. In the above formulas, a group represented by Z² is a divalent organic group which may contain an aromatic ring, and has a structure such that the boiling point of compound (A) is 340°C or lower.

In the compounds with two or more aromatic rings, diphenylsulfide and its fluorine-substituted compound (i.e., a diphenylsulfide compound in which hydrogen atoms on the benzene rings are fully or partially substituted with fluorine atoms), and diphenylsulfone and its fluorine-substituted compound may be particularly preferable. Further, biphenyl compounds and its fluorine-substituted compounds can also be used as compound (A).

Further, there can be used, as compound (A), antioxidants of the hindered phenol type, such as triethyleneglycol bis[3-(3-t-butyl-4-hydroxy-5-methylphenyl)propionate] (trade name: Irganox (registered trademark) 1010, available from Chiba Speciality Chemicals Co., Ltd.) and 3,9-bis{2-[3-(3-t-butyl-4-hydroxy-5-methylpheny)-propyonyloxy]-1,1-dimethylethyl}-2,4,8,10-tetrakiso xaspiro[5,5]undecane (trade name: ADKSTAB AO80, available from ADEKA CORPORATION) ; and antioxidants of the phosphorus type, such as bis(2,6-di-t-butyl-4-methylphenyl)pentaerythritol-di-phosphite and tris(2,4-di-t-butylphenyl)phosphite.

The compound (A) may preferably be added at an amount of 1% to 50% by mass, when the total amount of fluorinated polyamide acid and compound (A) is 100% by mass. When it is smaller than 1% by mass, water discharging acceleration function may be unable to be sufficiently exhibited, so that an optical loss at 1.49 µm and at 1.35 µm or lower cannot be reduced. However, when compound (A) is blended at an amount of greater than 50% by mass, the addition amount is too great for compound (A) to vaporize completely in a baking process, so that compound (A) may remain in a membrane and decompose at a high temperature, thereby making it impossible to obtain a uniform membrane with a flatness.

The fluorinated polyamide acid resin composition of the present invention can be produced by appropriately mixing a fluorinated polyamide acid with compound (A) using a known mixer, for example, a self/centrifugal double rotation mixer. A solvent (s) may be added to the resin composition. As a solvent that can be used, the organic solvents recited for use in the production of a polyamide acid described above can be used as they are. Also, there can be employed a method in which compound (A) is added in the reaction of a diamine compound with any of tetracarboxylic acid and the like in the production process of a polyamide acid described above. These solvents may be used alone, or two or more kinds of them may also be used in combination. When a solvent is used, the total amount of fluorinated polyamide acid and compound (A) in a solvent may preferably be set to be 10% to 50% by mass. Also, the viscosity of a resin composition may preferably be 10 to 1,000 poises, more preferably 25 to 150 poises, at 25°C.

The fluorinated polyamide acid resin composition of the present invention is baked to give a corresponding fluorinated polyimide. Baking is carried out to convert a fluorinated polyamide acid resin composition into a fluorinated polyimide by thermal ring closing reaction. Usually, this baking process is carried out as a process in the production of optical devices such as optical waveguide devices, so that baking may be carried out after applying a fluorinated polyamide acid resin composition to a substrate. During the baking, compound (A) is vaporized, and therefore, it does not remain in a resulting fluorinated polyimide membrane.

As a method of applying a fluorinated polyamide acid resin composition to a substrate, known methods can be employed, such as a casting method, a spin coating method, a roll coating method, a spray coating method, a bar coating method, a flexographic method, and a dip coating method, and a spin coating method may be preferable because it allows forming a thin layer with a uniform thickness only on a substrate in a short time. As a substrate, known materials can be used, irrespective of inorganic materials and organic materials, but silicon substrates; glass substrates such as quartz and Pyrex (registered trademark) ; metal substrates such as aluminum and copper; metal oxide substrates; resin substrates such as polyimides and polyether ketones; organic-inorganic hybrid substrates; and the like may preferably be used from the viewpoint that thermal deformation is suppressed at a polyimide baking temperature.

After the coated film of a fluorinated polyamide acid resin composition is formed on a substrate, it is baked in a baking furnace. The baking furnace is not particularly limited, but it may be preferable to use an inert oven, a clean oven, a vacuum baking furnace, or the like. Also, an atmospheric gas is not particularly limited, so long as gas flow is provided, but an inert gas such as nitrogen gas, helium gas, and argon gas may be preferable, and nitrogen gas may be more preferable because of easy availability.

The present inventors had confirmed that when the introduction amount of atmospheric gas in a baking process is increased (the ventilation frequency is set to be 0.07 times/min. or higher), an optical loss at 1.49 µm can be reduced (see Japanese Patent Application No. 2005-110779 ). In the present invention, since the water discharging effect from a membrane in the imidation is improved by a function of compound (A), even when the introduction amount of atmospheric gas is reduced to 15 liters/min. or lower (the ventilation frequency is lower than 0.07 times/min.), a polyimide membrane exhibiting a low optical loss was able to be produced. The amount of nitrogen gas may be 10 L/min. or smaller, more preferably 5 L/min. or smaller. Thus, the flow rate of nitrogen can considerably be reduced, so that ordinary baking furnaces having no special means of nitrogen introduction becomes usable, which widens the range of selection for production equipments. The term "ventilation frequency" as used herein means N/V (time/min.), when the internal space of a baking furnace is V (L) and the flow rate of an atmospheric gas is N (L/min.). Thus, the ventilation frequency is determined by the flow rate of an atmospheric gas depending on the internal space of a baking furnace.

The baking temperature (the maximum available temperature) may be 340°C or lower. More preferably, it is 320°C or lower, still more preferably 300°C or lower. This is because the addition of compound (A) makes it possible to reduce a light absorption peak at 1.49 µm, even if baking is not carried out at a temperature of higher than 340°C as in a conventional manner. Also, when the baking temperature becomes higher, the oxidation of a polyimide may occur significantly, so that an optical loss at 1.35 µm or lower may become greater. However, when the baking temperature is too low, imidation by heating may proceed slowly, so that the physical properties of a resulting polyimide membrane may adversely be affected. Therefore, the baking temperature may preferably be 200°C or higher, more preferably 250°C or higher. Also, the baking temperature may preferably be not lower than the boiling point of compound (A). The rate of raising the temperature from room temperature to the maximum baking temperature is not particularly limited, but may be set to a condition on which a desired polyimide membrane can be produced, and the temperature may be raised continuously or stepwise. The rate of cooling the temperature from the completion of membrane formation back to room temperature is not particularly limited, but may be set to a condition on which a desired polyimide membrane can be produced, and the temperature may be cooled continuously or stepwise. In addition, baking may preferably be carried out for 1 hour or longer.

A multilayer membrane may be formed on a substrate. After a first layer of a fluorinated polyimide membrane is formed through a baking process, a fluorinated polyimide precursor for a second layer is applied to the first layer, followed by baking to form a second layer of a fluorinated polyimide membrane, and this process is repeated. The term "first layer" as used herein means a first formed fluorinated polyimide membrane on a substrate, and the term "second layer" as used herein means a fluorinated polyimide membrane formed on the first layer. The composition of the second layer can appropriately be selected depending on the desired applications of a polyimide multilayer membrane, and is not particularly limited, but may be a composition which is the same as or different from the composition of the first layer. In the formation of the second layer, the application and baking of a fluorinated polyamide acid resin composition may be carried out under the conditions of temperature, time, and atmosphere as described above. In addition, the forming conditions may be different between the first layer and the second and subsequent layers, so long as they are under the conditions of temperature, time, and atmosphere as described above.

Polyimide membranes obtained from the fluorinated polyamide acid resin composition of the present invention have a low degree of color development. As described above, this is because water is rapidly discharged outside the membrane by the function of compound (A) in a baking process, and an optical loss at 1.49 µm can be reduced, even by baking at a low temperature, and the oxidation of a polyimide can also be suppressed by baking at a low temperature, which prevents a color development at a short wavelength. In particular, the adoption of the present invention allows even a fully fluorinated polyimide membrane, which is liable to cause color development, to have a Y value of 15 or lower. When a fully fluorinated polyimide membrane is obtained without addition of compound (A) through a baking process at 320°C for 1 hour, the Y value is 19.1. However, it was found that when it is baked using bis(pentafluorophenyl)sulfide at 25% by weight as compound (A) at 320°C for 1 hour, the Y value becomes as extremely low as 5.3. In the present invention, the Y value was determined as a value measured for a film (membrane) having a thickness of 8 µm by a colorimeter (trade name: SZ-Σ90, available from Nippon Denshoku Co., Ltd.).

A fluorinated polyimide membrane obtained by baking the fluorinated polyamide acid resin composition of the present invention has excellent heat resistance, chemical resistance, water repellency, dielectric property, electric property, and optical property, so that it is useful in various optical materials including print circuit boards, interlayer insulation films for LSIs, sealing materials for semiconductor components, optical components, opto-electronic integrated circuits (OEICs), and optical waveguide devices in opto-electronic mixed mounting wiring boards.

The optical waveguide device of the present invention has a known structure, except that fluorinated polyimide membranes obtained from the fluorinated polyamide acid resin composition of the present invention are used for both or either of a core and a clad. The structure and production method of the optical waveguide device are not particularly limited. Taking an example, a resin composition for a lower clad is applied to any substrate such as silicon, quartz, and resin, followed by baking to give a lower clad; to the lower clad thus obtained is applied a resin composition for a core, followed by baking; To the core membrane thus obtained is applied a photoresist, followed by irradiation of ultraviolet light using a photomask with an optical circuit pattern to give an optical circuit pattern; then, through dry etching (e.g., RIE (reactive ion etching)) or the like, core membrane portions on which the photoresist has not been formed are selectively removed, and the photoresist membrane is then peeled off, followed by application of a resin composition for an upper clad and baking, thereby to give an embedded type optical waveguide.

### Examples

The present invention will be described below in detail by reference to Examples and Comparative Examples, but the present invention is not limited to these Examples. The present invention can be put into practice after appropriate modifications or variations within a range meeting the gists described above and later, all of which are included in the technical scope of the present invention.

### Experiment 1

A 50-mL three-neck flask was charged with 1.80 g (10 mmols) of 2,4,5,6-tetrafluoro-1,3-diaminobenzene, 5.82 g (10 mmols) of 4,4'-[(2,3,5,6-tetrafluoro-1,4-phenylene)bis(oxy)]bis(3,5,6-trifluorophthalic anhydride) of the following formula: 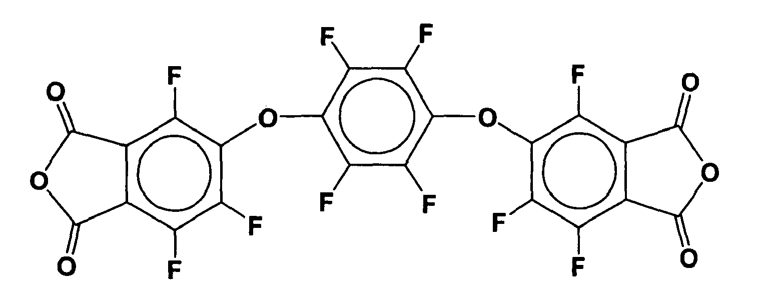 and 12.4 g of N,N-dimethylacetamide. The mixture was stirred at room temperature in a nitrogen atmosphere for 2 days to give a fully fluorinated polyamide acid solution (a 38% by weight polyamide acid solution).

To this fully fluorinated polyamide acid solution was added, as compound (A), bis(pentafluorophenyl)-sulfide (having a boiling point of 120°C) so that its content became 25% by mass (therefore, the content of the fully fluorinated polyamide acid (dry) was 75% by mass), and the mixture was stirred and defoamed using a self/centrifugal double rotation mixer (trade name: "AWATORI RENTARO", available from Thinky Corporation) to give a fully fluorinated polyamide acid resin composition No.1.

Then, the resin composition No.1 was spin coated on a silicon substrate so that its membrane thickness after baking became 15 µm using a spin coater (Mikasa Co., Ltd.), and baked in an inert oven at 300°C under a nitrogen atmosphere (40 liters/min.) for 1 hour. The thus obtained fluorinated polyimide membrane exhibited an optical loss of 2.0 dB/cm at a wavelength of 0.85 µm. The optical loss (5 cm in length) was measured by a light spectrum analyzer (trade name: AQ6317, available from Yokogawa Electric Corporation) using a white light source (trade name: AQ4305, available from Yokogawa Electric Corporation) (the same holds for the following).

### Experiment 2

A 50-mL three-neck flask was charged with 1.97 g (10 mmols) of 5-chloro-1,3-diamino-2,4,6-trifluoro-benzene, 5.82 g (10 mmols) of 4,4'-[(2,3,5,6-tetra-fluoro-1,4-phenylene)bis(oxy)]bis(3,5,6-trifluoro-phthalic anhydride) used in Experiment 1, and 15.8 g of N,N-dimethylacetamide. The mixture was stirred at room temperature in a nitrogen atmosphere for 2 days to give a partially fluorinated polyamide acid solution (a 33.0% by mass polyamide acid solution). To this partially fluorinated polyamide acid solution was added, as a compound (A), bis(pentafluorophenyl)-sulfide so that its content became 25% by mass (therefore, the content of the partially fluorinated polyamide acid (dry) was 75% by mass), and the mixture was stirred and defoamed in the same manner as described above to give a partially fluorinated polyamide acid resin composition No.2 for a core.

Using the fully fluorinated polyamide acid resin composition No.1 produced in Experiment 1, in the same manner as described in Experiment 1, a lower clad having a membrane thickness of 15 µm was formed on a silicon substrate. Then, the partially fluorinated polyamide acid resin composition No.2 was spin coated on the lower clad so that its membrane thickness after baking became 8 µm, and baked in the same manner as described in Experiment 1 to give a core membrane. A resist layer was disposed on the core membrane, irradiated by ultraviolet light through a photomask, and developed to form a pattern. Then, oxygen plasma was irradiated thereon using a RIE (a reactive ion etching apparatus, available from ANELVA Corporation) to etch the core layer. After peeling off the resist membrane, an upper clad was obtained by membrane formation and baking in the same manner as the lower clad to give an optical waveguide device having an 8-µm square core. The thus obtained optical waveguide device was cut out into chips by a dicing saw, and the optical loss (5 cm in length) was evaluated as follows: the loss value at a wavelength of 1.49 µm was 0.42 dB/cm and the loss value at a wavelength of 0.85 µm was 1.6 dB/cm, both of which were very low values.

### Experiment 3 (for comparison)

A fluorinated polyimide membrane was produced in the same manner as described in Experiment 1, except that bis(pentafluorophenyl)sulfide was not added. The thus obtained fluorinated polyimide membrane exhibited a loss value at 0.85 µm of 3.4 dB/cm.

### Experiment 4 (for comparison)

An optical waveguide device was produced in the same manner as described in Experiment 2, except that bis(pentafluorophenyl)sulfide was not added. The optical loss (5 cm in length) of this optical waveguide device was evaluated as follows: the loss value at a wavelength of 1.49 µm was 1.0 dB/cm, which approximately doubled the loss value in Experiment 2.

### Experiment 5

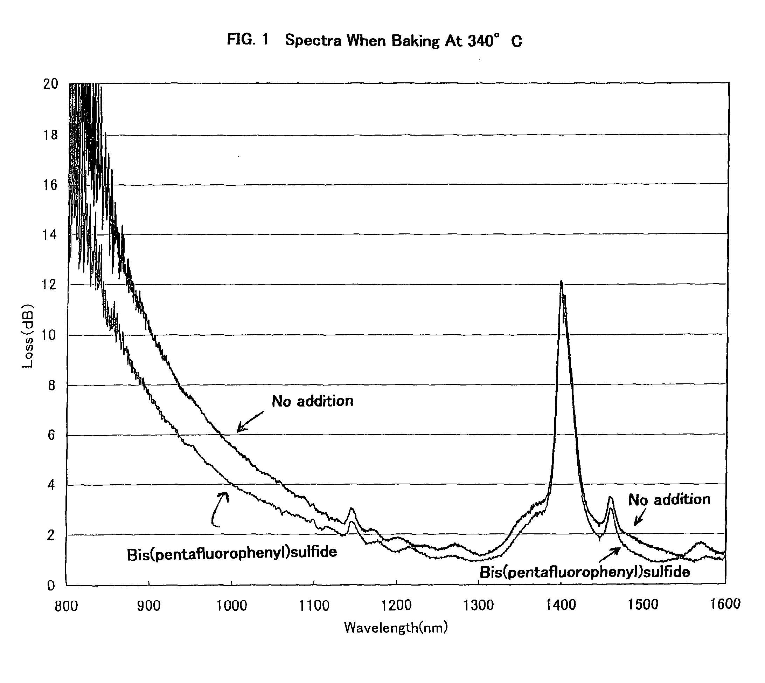

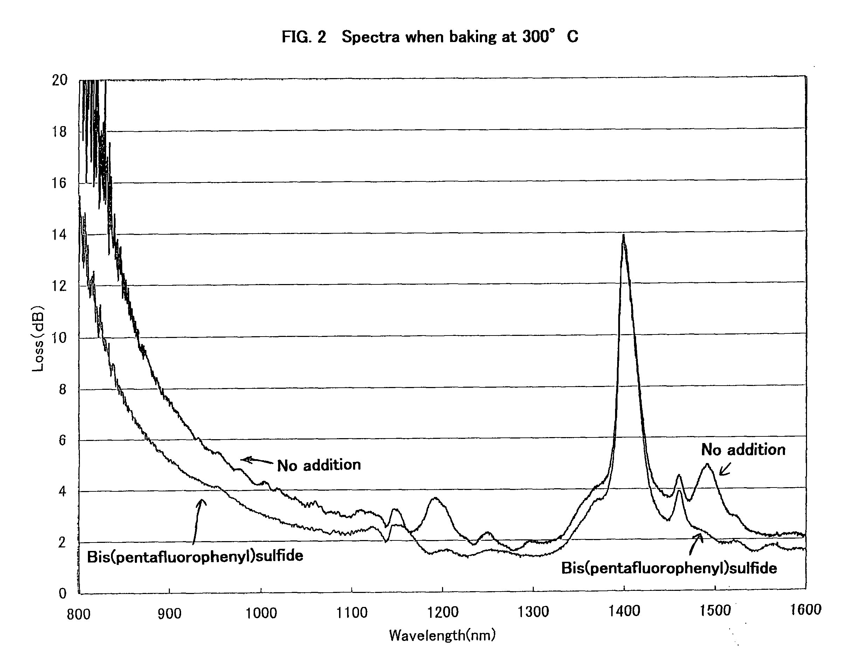

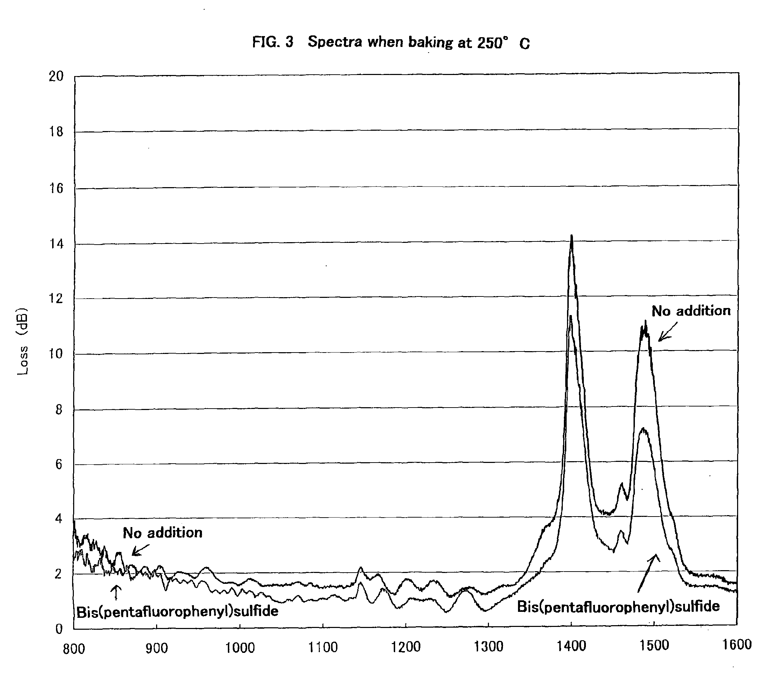

Optical waveguide devices (5 cm in length) were produced in the same manner as described in Experiment 2, except that baking temperature was changed to 340°C and 250°C, and the optical loss was measured. Also, an optical loss of a system containing no compound (A) was measured for comparison. Spectra obtained when the baking temperature was 340°C, 300°C, and 250°C are shown in FIGs. 1, 2 and 3, respectively.

In the system containing bis(pentafluorophenyl)-sulfide as compound (A), the results showed: when the baking temperature was 340°C, 0.23 dB/cm at 1.49 µm and 2.4 dB/cm at 0.85 µm; and when the baking temperature was 250°C, 1.4 dB/cm at 1.49 µm and 0.4 dB/cm at 0.85 µm. It is found that these are lower than those of the system containing no compound (A).

### Experiment 6

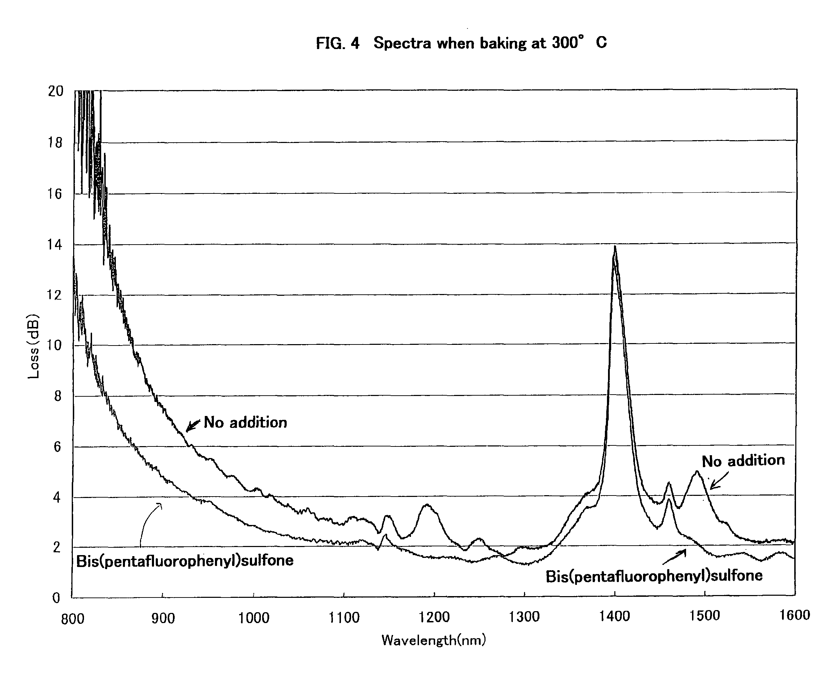

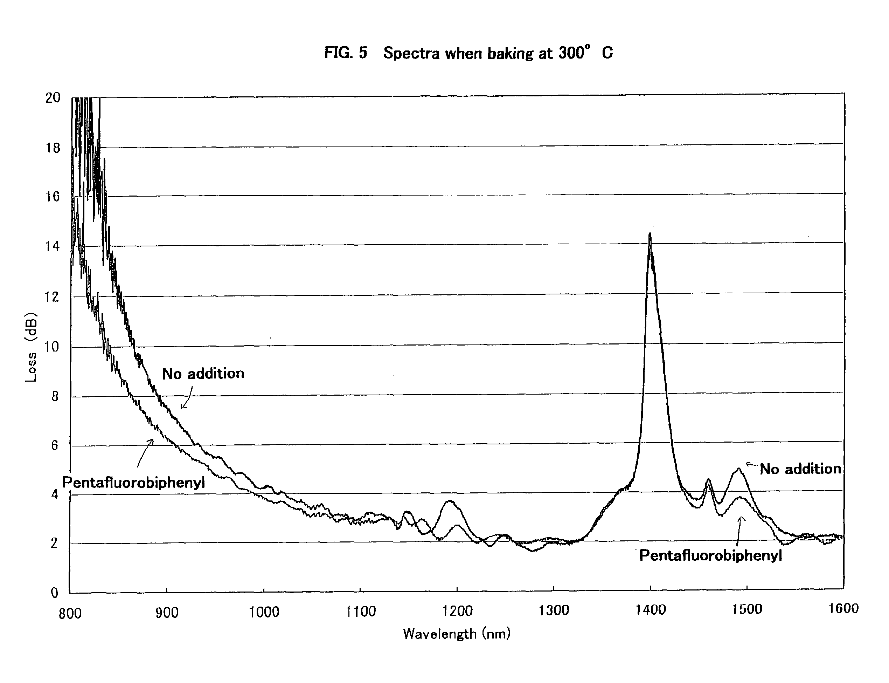

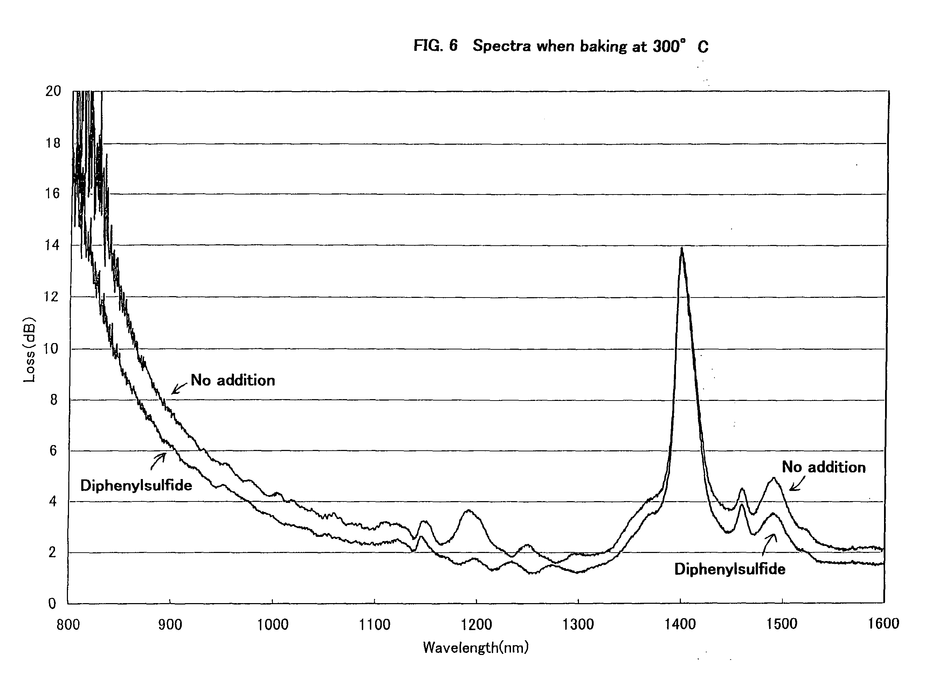

Optical waveguide devices (5 cm in length) were produced in the same manner as described in Experiment 2, except that bis(pentafluorophenyl)sulfone (having a boiling point of 160°C; FIG. 4), pentafluorobiphenyl (having a boiling point of 206°C; FIG. 5), and diphenylsulfide (having a boiling point of 296°C; FIG. 6) were used as a compound (A), respectively, in place of bis(pentafluorophenyl)sulfide, and the optical loss was measured. An optical loss spectrum of a system containing no compound (A) was also shown in the figures for comparison. It was found that all of the systems containing compound (A) exhibited a lower optical loss at 1.49 µm and at 1.35 µm or lower.

### Experiment 7

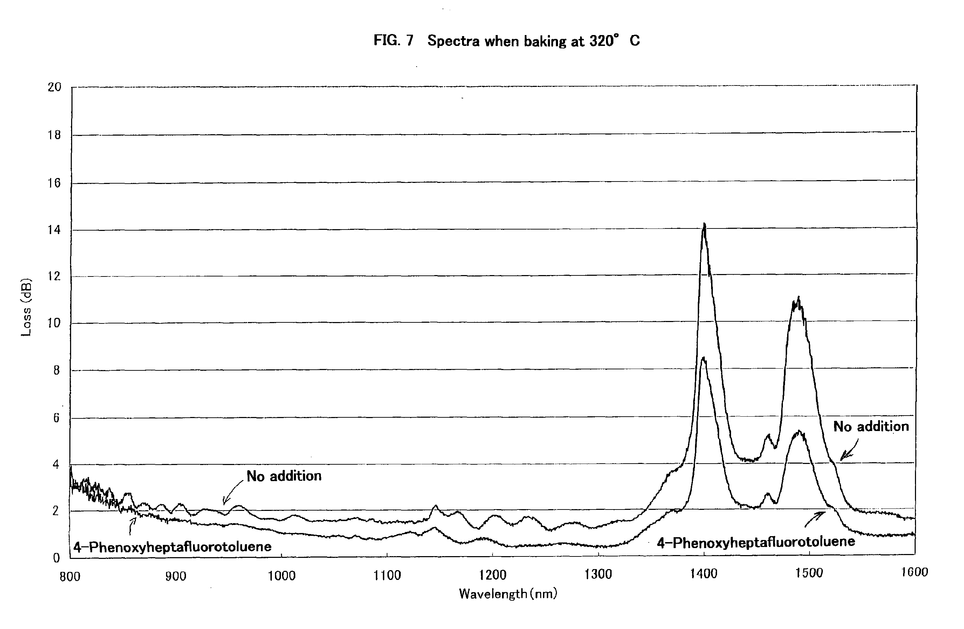

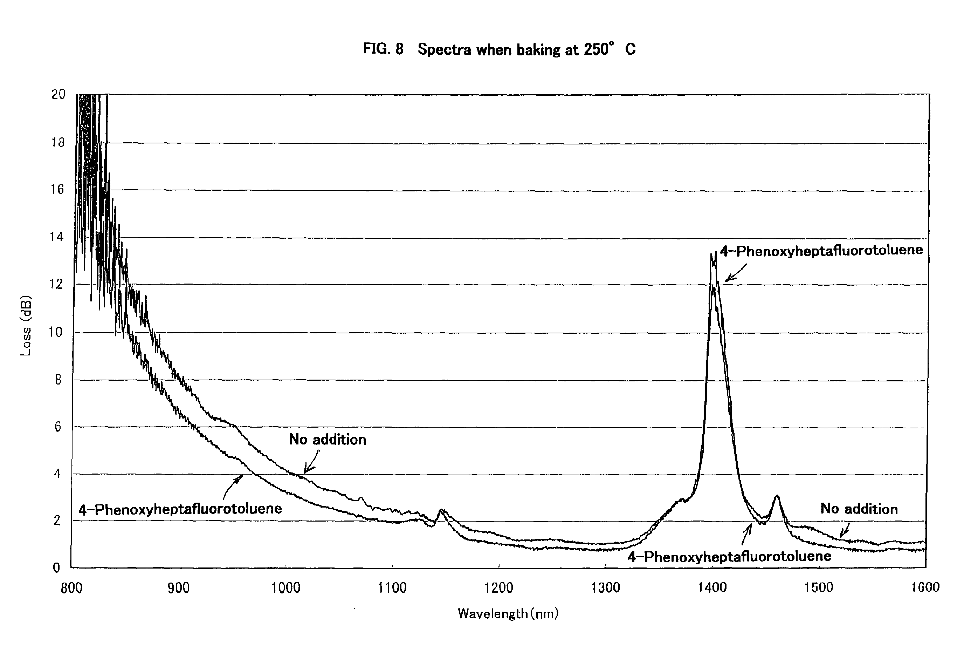

Optical waveguide devices (5 cm in length) were produced in the same manner as described in Experiment 2, except that 4-phenoxyheptafluorotoluene (having a boiling point of 316°C) was added as a compound (A) in place of bis (pentafluorophenyl) sulfide to a partially fluorinated polyamide acid solution (a 33.0% by mass polyamide acid solution) so that its content became 50% by mass (therefore, the content of the partially fluorinated polyamide acid (dry) was 50% by mass) to give a partially fluorinated polyamide acid resin composition for a core, and the baking temperature was changed to 320°C and 250°C, and the optical loss was measured. Also, an optical loss of system containing no compound (A) was measured for comparison. Spectra when the baking temperatures were 320°C and 250°C are shown in FIGs. 7 and 8, respectively.

In the system containing 4-phenoxyheptafluorotoluene as compound (A), the results showed: when the baking temperature was 250°C, 1.0 dB/cm at 1.49 µm; and when the baking temperature was 320°C, 0.21 dB/cm at 1.49 µm. It is found that these are lower than those of the system containing no compound (A).

### Experiment 8

To 10 g of the fully fluorinated polyamide acid solution (a 38% by mass polyamide acid solution) obtained in Experiment 1 was added a solution of 0.4 g of 3-aminopropylmethoxysilane dissolved in 5 g of N,N-dimethylacetamide, and the mixture was stirred by a self/centrifugal double rotation mixer (trade name: "AWATORI RENTARO", available from Thinky Corporation). Then, 1.52 g of trifluoropropylmetoxysilane and 0.18 g of water were added to the solution, and the mixture was stirred and defoamed by a self/centrifugal double rotation mixer (trade name: "AWATORI RENTARO", available from Thinky Corporation) to give a fully fluorinated polyamide acid resin composition No.3 for a clad.

A 50-mL three-neck flask was charged with 1.97 g (10 mmols) of 5-chloro-1,3-diamino-2,4,6-trifluoro-benzene, 5.82 g (10 mmols) of 4,4'-[(2,3,5,6-tetra-fluoro-1,4-phenylene)bis(oxy)]bis(3,5,6-trifluoro-phthalic anhydride) used in Experiment 1, and 10.75 g of N,N-dimethylacetamide. The mixture was stirred at room temperature in a nitrogen atmosphere for 6 days to give a partially fluorinated polyamide acid solution (a 42.0% by mass polyamide acid solution). To this partially fluorinated polyamide acid solution was added, as a compound (A), bis(pentafluorophenyl)-sulfide (having a boiling point of 120°C) so that its content became 25% by mass (therefore, the content of the partially fluorinated polyamide acid (dry) was 75% by mass), and the mixture was stirred and defoamed in the same manner as described above to give a partially fluorinated polyamide acid resin composition No.4 for a core.

The fully fluorinated polyamide acid resin composition No.3 for a clad was spin coated on a silicon substrate so that its membrane thickness after baking became 15 µm, and baked in an inert oven at 300°C under a nitrogen atmosphere (40 liters/min.) for 10 hours to give a lower clad. The partially fluorinated polyamide acid resin composition No.4 for a core was spin coated on the lower clad so that its membrane thickness after baking became 50 µm, and baked in the same manner as described above to give a core membrane.

Then, two grooves having a distance of 50 µm and a depth of 50 µm were cut in the core membrane using a dicing saw (trade name: DAD321, available from Disco Corporation), while flowing water in large quantities, and the fully fluorinated polyamide acid resin composition No.3 for a clad was spin coated so that its membrane thickness after baking became 15 µm and baked in an inert oven at 300°C under a nitrogen atmosphere (40 liters/min.) for 10 hours to give an upper clad. Further, the edge faces of an optical waveguide were cut using a dicing saw (trade name: DAD321, available from Disco Corporation), while flowing water in large quantities, thereby forming a large aperture embedded type liner optical waveguide having a length of 50 mm, which had a 50-µm square core membrane. The optical loss (5 cm in length) of the large aperture embedded type liner optical waveguide was evaluated as follows: the loss value at a wavelength of 1.49 µm was 0.3 dB/cm, which was a very low value.

In this experiment, in the processing using a dicing saw, while flowing water in large quantities, there was no peeling of the fluorinated polyimide films, and the edge faces of the optical waveguide were mirror planes.

### Experiment 9

The partially fluorinated polyamide acid resin composition No.4 for a core obtained in Experiment 8 was spin coated on a silicon substrate so that its membrane thickness after baking became 8 µm and baked in an inert oven at 300°C under a nitrogen atmosphere (40 liters/min.) for 10 hours to give a core membrane.

Then, two grooves having a distance of 50 µm and a depth of 50 µm were cut in the core membrane using a dicing saw (trade name: DAD321, available from Disco Corporation), while flowing water in large quantities, and the fully fluorinated polyamide acid resin composition No.3 for a clad obtained in Experiment 7 was spin coated so that its membrane thickness after baking became 15 µm and baked in an inert oven at 300°C under a nitrogen atmosphere (40 liters/min.) for 10 hours to give an upper clad. Further, the edge faces of an optical waveguide were cut using a dicing saw (trade name: DAD321, available from Disco Corporation), while flowing water in large quantities, thereby forming a large aperture embedded type liner optical waveguide having a length of 50 mm, which had a 50-µm square core membrane. The optical loss (5 cm in length) of the large aperture embedded type liner optical waveguide was evaluated as follows: the loss value at a wavelength of 1.49 µm was 0.3 dB/cm, which was a very low value.

In this experiment, in the processing using a dicing saw, while flowing water in large quantities, there was no peeling of the fluorinated polyimide films, and the edge faces of the optical waveguide were mirror planes.

Polyimide membranes obtained from the resin composition of the present invention were able to exhibit a low optical loss at the communication wavelengths in the B-PON system, that is, at all of 1.31 µm, 1.49 µm, and 1.55 µm. In addition, they have excellent heat resistance, chemical resistance, water repellency, dielectric property, electric property, and optical property, and therefore, they are useful for various optical materials including print circuit boards, interlayer insulation films for LSIs, sealing materials for semiconductor components, optical components, opto-electronic integrated circuits (OEICs), and optical waveguides in opto-electronic mixed mounting wiring boards.

## Claims

1. A fluorinated polyamide acid resin composition for optical materials, comprising a fluorinated polyamide acid and a non-polycondensable compound (A) with an aromatic ring having a boiling point of 340°C or lower, the resin composition being used for obtaining a fluorinated polyimide membrane by a baking process.

2. The fluorinated polyamide acid resin composition for optical materials according to claim 1, wherein the compound (A) is a compound with two or more aromatic rings.

3. The fluorinated polyamide acid resin composition for optical materials according to claim 2, wherein the compound (A) is a compound of formula (1) : 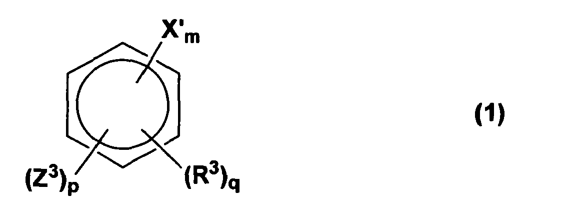 [wherein Z³'s each independently means a group of formula (2): 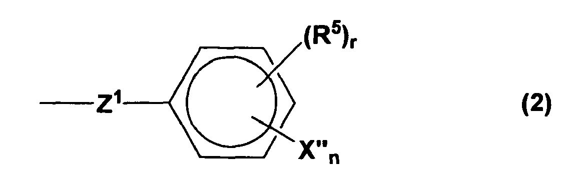 (wherein Z¹ means a divalent organic group or a direct bond; R⁵'s each independently means -CN, -CF₃, -NO₂, -COOR⁴, or -OR⁴; X"s each independently means a halogen atom; r and n each independently means an integer of 0 to 5; and r + n is 0 to 5; wherein R⁴ means an alkyl group, a deuterated alkyl group, or a halogenated alkyl group);
R³' s each independently means -CN, -CF₃, -NO₂, -COOR⁴, or -OR⁴; X's each independently means a halogen atom; p means an integer of 1 to 6; q and m each independently means an integer of 0 to 5; and p + q + m is 1 to 6; wherein R⁴ means an alkyl group, a deuterated alkyl group, or a halogenated alkyl group].

4. The fluorinated polyamide acid resin composition for optical materials according to any one of claims 1 to 3, wherein the fluorinated polyamide acid is a fully fluorinated polyamide acid.

5. A fluorinated polyimide membrane for optical materials, which exhibits an optical loss at a wavelength of 1.49 µm of 0.42 dB/cm or lower and an optical loss at a wavelength of 0.85 µm of 1.6 dB/cm or lower.

6. An optical waveguide device comprising a fluorinated polyimide membrane for optical materials according to claim 5.
